# EUROPÄISCHE PATENTSCHRIFT

(11) **EP 1 525 155 B1**
(45) Veröffentlichungstag und Bekanntmachung des Hinweises auf die Patenterteilung: **29.08.2007**
(21) Anmeldenummer: 03725181.6
(22) Anmeldetag: 09.05.2003
(51) Int. Cl.: C01B 17/04

(54) **ABHITZEKESSEL FÜR EINE CLAUS-ANLAGE**
WASTE-HEAT BOILER FOR A CLAUS PLANT
CHAUDIERE A RECUPERATION POUR UNE INSTALLATION CLAUS

(30) Priorität: 25.07.2002 DE 10233818
(43) Veröffentlichungstag der Anmeldung: 27.04.2005
(73) Patentinhaber: Uhde GmbH, 44141 Dortmund (DE)
(72) Erfinder: THIELERT, Holger, 44379 Dortmund (DE); SCHÜPPHAUS, Klaus, 45699 Herten (DE)
(74) Vertreter: Albrecht, Rainer Harald
(86) Internationale Anmeldenummer: PCT/EP2003/004868
(87) Internationale Veröffentlichungsnummer: WO 2004/014790

(56) Entgegenhaltungen:
- US-A- 1 957 006
- US-A- 4 249 921
- US-A- 4 303 633
- US-A- 4 391 791
- US-A- 5 176 896

## Beschreibung

Die Erfindung betrifft einen Abhitzekessel für eine Claus-Anlage.

In einer Claus-Anlage wird Schwefelwasserstoff in elementaren Schwefel umgewandelt, der durch Kühlung des Prozessgasstromes kondensiert und flüssig abgeschieden wird. Eine Claus-Anlage besteht in ihrem grundsätzlichen Aufbau aus einer Brennkammer, einem Abhitzekessel sowie mindestens einer Katalysatorstufe. Ein H₂S enthaltendes Sauergas wird zusammen mit Luft und Heizgas in die Brennkammer geleitet, wo in einer exothermen Reaktion etwa 60 bis 70 % des Schwefelwasserstoffs zu Schwefel umgesetzt werden. Das Prozessgas verlässt mit einer Temperatur von ca. 1200 °C die Brennkammer und wird im Abhitzekessel auf eine Temperatur unterhalb von 170 °C abgekühlt. Nach Abscheidung des kondensierenden Schwefels wird das Prozessgas wieder erwärmt und einer Katalysatorstufe zugeführt, in der bei einer Arbeitstemperatur unterhalb von 300 °C Schwefelwasserstoff, der im Prozessgas noch enthalten ist, in elementaren Schwefel umgewandelt wird. Das die Katalysatorstufe verlassende Prozessgas wird auf eine zur Kondensation des Schwefels erforderliche Temperatur abgekühlt. Nach Abscheidung des Schwefels wird das Prozessgas regelmäßig einer weiteren Katalysatorstufe zugeführt, in der der Restgehalt an Schwefelwasserstoff in Schwefel umgesetzt wird, der nach erneuter Abkühlung des Prozessgases abgeschieden werden kann. Für die Kühlung des aus der Brennkammer abgezogenen heißen Prozessgases einerseits und die Kühlung der die Katalysatorstufen verlassenden Prozessgase andererseits werden üblicherweise separate Abhitzekessel eingesetzt. In Ullmanns Encyklopädie der technischen Chemie, Band 21, Seite 11, Abb. 7 ist eine Claus-Anlage beschrieben, die einen zweistufigen Abhitzekessel aufweist, in welchem das Prozessgas aus der Brennkammer sowie das Prozessgas aus einer Katalysatorstufe abgekühlt werden. Die konstruktive Ausführung des Abhitzekessels ist nicht beschrieben. Aufgrund der großen Temperaturunterschiede der eintretenden Prozessgasströme müssen erhebliche Wärmespannungen befürchtet werden, die in einem einzigen Apparat nur schwer zu beherrschen sind.

Der Erfindung liegt die Aufgabe zugrunde, einen Abhitzekessel für eine Claus-Anlage zur Erzeugung von niedergespanntem Dampf anzugeben, der einfach aufgebaut ist und sowohl die Kühlung des aus der Brennkammer austretenden heißen Prozessgases als auch die Kühlung der die Katalysatorstufen verlassenden kühleren Prozessgase in einem einzigen Apparat ermöglicht.

Gegenstand der Erfindung und Lösung dieser Aufgabe ist ein Abhitzekessel für eine Claus-Anlage mit
einem von einem druckfesten Mantel umgebenen Dampferzeugerraum,
einem langen Rohrbündel aus Wärmetauscherrohren, die sich durch den Dampferzeugerraum erstrecken und an beiden Enden in Rohrböden eingesetzt sind, welche den Dampferzeugerraum begrenzen,
mindestens einem weiteren Rohrbündel aus kürzeren Wärmetauscherrohren, die an ihrem austrittsseitigen Ende ebenfalls in den Rohrboden eingesetzt sind und an ihrem eintrittsseitigen Ende in eine Anströmkammer münden, und
einem Kopfstück, das am austrittsseitigen Ende an den Rohrboden anschließt und in Sektionen unterteilt ist,
wobei das lange Rohrbündel von einem aus einer Brennkammer austretenden heißen Prozessgas durchströmt wird, wobei die Anströmkammer innerhalb des Dampferzeugerraums angeordnet ist und von einem kühleren Prozessgas aus einer Katalysatorstufe der Claus-Anlage beaufschlagt ist, wobei jeder Sektion des Kopfstücks jeweils ein Rohrbündel zugeordnet ist und wobei an die Sektionen Einrichtungen zur Ableitung von kondensiertem Schwefel angeschlossen sind.

Der Abhitzekessel ist liegend angeordnet. An den Dampferzeugerraum sind übliche Einrichtungen für eine geregelte Kesselspeisewasserzuführung sowie Dampfabzugseinrichtungen angeschlossen. Durch die in den Dampferzeugerraum integrierte Anströmkammer können die unterschiedlichen Gaseintrittstemperaturen beherrscht werden, ohne dass aufwendige Maßnahmen zum Ausgleich von Wärmedehnungen erforderlich sind.

Gemäß einer bevorzugten Ausführung der Erfindung ist an den eintrittsseitigen Rohrboden ein Kopfstück mit einem Anschlussflansch zur unmittelbaren Befestigung an der Brennkammer oder an einem die Brennkammer enthaltenden Spaltreaktor der Claus-Anlage angeschlossen. Die Anströmkammer weist einen mantelseitigen Gaseinlass für das Prozessgas auf. Sofern die Claus-Anlage zwei oder mehr Katalysatorstufen aufweist, die bei Arbeitstemperaturen zwischen 200 °C und 300 °C betrieben werden, ist die Anströmkammer zweckmäßig in Anströmkammersektionen unterteilt, wobei die Anströmkammersektionen jeweils einen mantelseitigen Gaseinlass für das Prozessgas aus einer Katalysatorstufe der Claus-Anlage aufweisen.

Gemäß einer bevorzugten Ausführung der Erfindung ist die Position der Anströmkammer auf das sich innerhalb der Wärmetauscherrohre des langen Rohrbündels einstellende Temperaturprofil so abgestimmt, dass die Temperaturunterschiede zwischen der Anströmkammer und der örtlichen Temperatur des durch das lange Rohrbündel geführten Prozessgases kleiner sind als 150 °C. Bei optimaler Abstimmung sollten die Temperaturunterschiede in den Rohren in jedem Querschnitt des Apparates möglichst gering sein.

Nach Abscheidung von kondensiertem Schwefel muss das Prozessgas auf eine Temperatur oberhalb der Schwefelkondensationstemperatur erwärmt werden, bevor das Prozessgas in die Katalysatorstufe eintritt. Die Erwärmung erfolgt zweckmäßig durch Zumischen von heißem Prozessgas. In weiterer Ausgestaltung lehrt die Erfindung, dass durch den Dampferzeugerraum ein Zusatzrohr für heißes Prozessgas geführt ist, welches mit einer hohen Temperatur wieder aus dem Zusatzrohr austritt und zur Erwärmung des auf eine Temperatur unterhalb der Kondensationstemperatur von Schwefel gekühlten Prozessgasstromes einsetzbar ist. Auf der Abströmseite des Zusatzrohres ist eine Einrichtung zur Steuerung des durch das Zusatzrohr geführten Prozessgasmengenstromes vorgesehen.

Der erfindungsgemäße Abhitzekessel führt zur einer beachtlichen Vereinfachung der Claus-Anlage in apparatetechnischer Hinsicht. Die Verrohrung vereinfacht sich. Es entfallen Zwischenerhitzer und Kondensatoren. Eine stets aufwendige Kesselspeisewasserregelung muss lediglich für einen einzigen Apparat bereitgestellt werden.

Im Folgenden wird die Erfindung anhand lediglich ein Ausführungsbeispiel darstellenden Zeichnung erläutert. Es zeigen schematisch
- Fig. 1: eine Claus-Anlage mit einem erfindungsgemäß ausgebildeten Abhitzekessel,
- Fig. 2: eine weitere Ausführungsform des Abhitzekessels,
- Fig. 3: den Schnitt A-A aus Fig. 2.

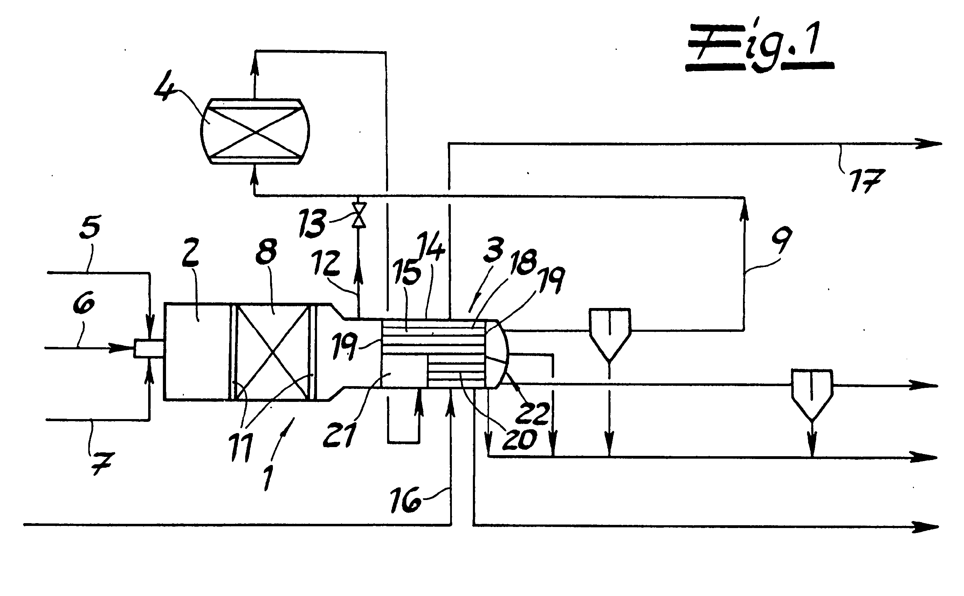

In der in Fig. 1 dargestellten Claus-Anlage wird Schwefelwasserstoff in elementaren Schwefel umgewandelt. Zum grundsätzlichen Aufbau der Anlage gehören ein Spaltreaktor 1 mit einer Brennkammer 2, ein an den Gasauslass des Spaltreaktors 1 angeschlossener Abhitzekessel 3 sowie eine Katalysatorstufe 4. Ein Schwefelwasserstoff enthaltendes Sauergas 5 wird zusammen mit Luft 6 und Heizgas 7 in die Brennkammer 2 des Spaltreaktors 1 eingeführt, der im Ausführungsbeispiel zusätzlich zu der Brennkammer 2 eine Katalysatorschüttung 8 enthält. Das Prozessgas verlässt den Spaltreaktor 1 mit einer Temperatur von ca. 1200 °C und wird im Abhitzekessel 3 auf eine zur Kondensation des Schwefels erforderliche Temperatur von weniger als 170 °C abgekühlt. Der kondensierende Schwefel wird abgeschieden. Nach Abscheidung des Schwefels wird das gekühlte Prozessgas 9 erwärmt und der Katalysatorstufe 4 zugeführt, in der Schwefelverbindungen an einem Katalysator in elementaren Schwefel umgesetzt werden. Die Katalysatorstufe 4 wird bei einer Temperatur von weniger als 300 °C betrieben. Das die Katalysatorstufe 4 verlassende Prozessgas wird ebenfalls in dem Abhitzekessel 3 auf die zur Kondensation des Schwefels erforderliche Temperatur abgekühlt. Der kondensierte Schwefel wird ausgeschieden.

Der Spaltreaktor 1 besteht aus einem feuerfest ausgekleideten liegenden zylindrischen Kessel, in welchem die Brennkammer 2, ein Katalysatorraum mit der Katalysatorschüttung 8 sowie ein abströmseitiger Raum nebeneinander angeordnet sind. Die Einströmöffnung und der Gasauslass sind an gegenüberliegenden Stirnseiten des Kessels angeordnet. Der Katalysatorraum ist beidseitig von gasdurchlässigen Gittersteinen 11 begrenzt und weist eine mantelseitige Füllöffnung zum Einbringen der Katalysatorschüttung 8 auf. Die Gittersteine 11 enthalten zweckmäßig Langlöcher. Am Umfang des abströmseitigen Raums ist eine feuerfest ausgekleidete Abzweigleitung 12 angeschlossen, die in eine benachbarte Prozessgasleitung einmündet. Im Mündungsbereich der Abzweigleitung 12 ist ein Ventil 13 angeordnet, mit dem der Mengenstrom des aus der Abzweigleitung 12 austretenden heißen Gasstromes regelbar ist. Der Ventilkörper des Ventils 13 wird dabei von dem kühlen Prozessgas 9 gekühlt, so dass übliche metallische Werkstoffe für den Ventilkörper verwendet werden können.

Der Abhitzekessel 3 weist einen von einem druckfestem Mantel 14 umgebenen Dampferzeugerraum auf, an den eine Zuführeinrichtung 16 für Kesselspeisewasser sowie eine Abzugseinrichtung 17 für niedergespannten Dampf angeschlossen sind. Der Abhitzekessel 3 enthält ein langes Rohrbündel 18 aus Wärmetauscherrohren, die sich durch den Dampferzeugerraum erstrecken und an beiden Enden in Rohrböden 19 eingesetzt sind, welche den Dampferzeugerraum begrenzen. Ferner ist mindestens ein weiteres Rohrbündel 20 aus kürzeren Wärmetauscherrohren vorgesehen, die an ihrem austrittsseitigen Ende ebenfalls in den Rohrboden 19 eingesetzt sind und an ihrem eintrittsseitigen Ende in eine Anströmkammer 21 münden. Das lange Rohrbündel 18 wird von dem aus der Brennkammer bzw. dem Spaltreaktor 1 austretenden heißen Prozessgas durchströmt. Die Anströmkammer 21 ist innerhalb des Dampferzeugerraums 15 angeordnet und wird von dem kühleren Prozessgas aus der Katalysatorstufe 4 beaufschlagt. Der Abhitzekessel 3 weist ferner ein Kopfstück 22 auf, das am austrittsseitigen Ende an den Rohrboden 19 anschließt und in Sektionen unterteilt ist. Jeder Sektion des Kopfstückes ist jeweils ein Rohrbündel 18, 20 zugeordnet. An die Sektionen sind Einrichtungen zur Ableitung von kondensiertem Schwefel angeschlossen.

Der Abhitzekessel 3 ist eintrittsseitig unmittelbar an den Spaltreaktor 1 angeschlossen. Er weist ein entsprechendes Kopfstück mit einem Anschlussflansch auf. Das aus der Katalysatorstufe 4 abgezogene kühlere Prozessgas ist über einen mantelseitigen Gaseinlass in die Anströmkammer 21 einspeisbar. Die Aufgabestelle für das kühlere Prozessgas ist entlang dem Abhitzekessel 3 so gewählt, dass keine allzu hohen Temperaturunterschiede in den Rohren auftreten und die Wärmespannungen beherrschbar sind. Im Ausführungsbeispiel ist die Position der Anströmkammer 21 auf das sich innerhalb der Wärmetauscherrohre des langen Rohrbündels 18 einstellende Temperaturprofil so abgestimmt, dass die Temperaturunterschiede zwischen der Anströmkammer 2 und der örtlichen Temperatur des durch das lange Rohrbündel 18 geführten Prozessgases kleiner sind als 150 °C.

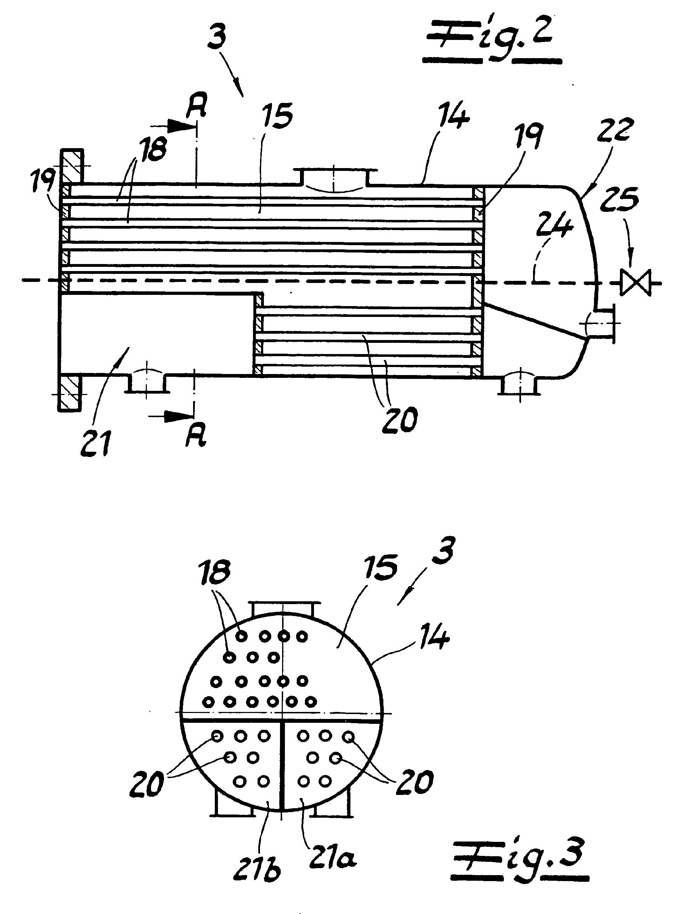

Die in den Fig. 2 und 3 dargestellte Ausführungsform ist für eine Claus-Anlage bestimmt, die eine Brennkammer bzw. einen Spaltreaktor und zwei bei Temperatur unterhalb von 300 °C betriebene Katalysatorstufen aufweist. Die Anströmkammer 21 ist in Anströmkammersektionen 21a, 21b unterteilt, die jeweils einen mantelseitigen Gaseinlass für das Prozessgas aus einer Katalysatorstufe aufweist. Es versteht sich, dass auch das gasaustrittsseitige Kopfstück 22 in eine entsprechende Anzahl von Sektionen unterteilt ist. In der Fig. 2 ist ferner durch eine gestrichelte Linie angedeutet, dass der Abhitzekessel ein Zusatzrohr 24 für heißes Prozessgas aufweisen kann, welches durch den Dampferzeugerraum geführt ist und an dem austrittsseitigen Ende mit einer Einrichtung 25 zur Steuerung des Prozessgasmengenstromes ausgerüstet ist. Das Zusatzrohr 24 ist so ausgelegt, dass das Prozessgas mit einer hohen Temperatur wieder aus dem Zusatzrohr 24 austritt und zur Erwärmung des auf eine Temperatur unterhalb des Kondensationstemperatur von Schwefel gekühlten Prozessgasstromes einsetzbar ist. Das Zusatzrohr 24 ersetzt insofern eine Bypassleitung.

## Patentansprüche

1. Abhitzekessel für eine Claus-Anlage mit
einem von einem druckfesten Mantel (14) umgebenen Dampferzeugerraum,
einem langen Rohrbündel (18) aus Wärmetauscherrohren, die sich durch den Dampferzeugerraum erstrecken und an beiden Enden in Rohrböden (19) eingesetzt sind, welche den Dampferzeugerraum begrenzen,
mindestens einem weiteren Rohrbündel (20) aus kürzeren Wärmetauscherrohren, die an ihrem austrittsseitigen Ende ebenfalls in den Rohrboden (19) eingesetzt sind und an ihrem eintrittsseitigen Ende in eine Anströmkammer (21) münden,
einem Kopfstück (22), das am austrittsseitigen Ende an den Rohrboden (19) anschließt und in Sektionen unterteilt ist,
wobei das lange Rohrbündel (18) von einem aus einer Brennkammer (2) austretenden heißen Prozessgas durchströmt wird, wobei die Anströmkammer (21) innerhalb des Dampferzeugerraums angeordnet ist und von einem kühleren Prozessgas (10) aus einer Katalysatorstufe (4) der Claus-Anlage beaufschlagt ist, wobei jeder Sektion des Kopfstücks (22) jeweils ein Rohrbündel (18, 20) zugeordnet ist und wobei an die Sektionen Einrichtungen zur Ableitung von kondensiertem Schwefel angeschlossen sind.

2. Abhitzekessel nach Anspruch 1, **dadurch gekennzeichnet, dass** an den eintrittsseitigen Rohrboden ein Kopfstück mit einem Anschlussflansch zur unmittelbaren Befestigung an der Brennkammer oder an einem die Brennkammer enthaltenden Spaltreaktor angeschlossen ist.

3. Abhitzekessel nach Anspruch 1 oder 2, **dadurch gekennzeichnet, dass** die Anströmkammer (21) einen mantelseitigen Gaseinlass für das Prozessgas aufweist.

4. Abhitzekessel nach Anspruch 1 oder 2, **dadurch gekennzeichnet, dass** die Anströmkammer (21) in Anströmkammersektionen (21a, 21b) unterteilt ist, wobei die Anströmkammersektionen (21a, 21b) jeweils einen mantelseitigen Gaseinlass für das Prozessgas aus einer Katalysatorstufe der Claus-Anlage aufweist.

5. Abhitzekessel nach einem Ansprüche 1 bis 4, **dadurch gekennzeichnet, dass** die Position der Anströmkammer (21) auf das sich innerhalb der Wärmetauscherrohre des langen Rohrbündels (18) einstellende Temperaturprofil so abgestimmt ist, dass die Temperaturunterschiede zwischen der Anströmkammer (21) und der örtlichen Temperatur des durch das lange Rohrbündel (18) geführten Prozessgas kleiner sind als 150°C.

6. Abhitzekessel nach einem der Ansprüche 1 bis 5, **gekennzeichnet durch** ein **durch** den Dampferzeugerraum geführtes Zusatzrohr (24) für heißes Prozessgas und einer auf der Abströmseite vorgesehenen Einrichtung (25) zur Steuerung des Prozessgasmengenstroms **durch** das Zusatzrohr (24), wobei das Prozessgas mit einer hohen Temperatur wieder aus dem Zusatzrohr (24) austritt und zur Erwärmung des auf eine Temperatur unterhalb der Kondensationstemperatur von Schwefel abgekühlten Prozessgasstromes einsetzbar ist.

## Claims

1. Waste heat boiler for a Claus plant, comprising
a steam generator chamber surrounded by a pressure-resistant mantle (14),
a long tube bundle (18) of heat exchanger tubes which extend through the steam generator chamber and are inserted at both ends into tube plates (19) which delimit the steam generator chamber,
at least one further tube bundle (20) of shorter heat exchanger tubes which are likewise inserted into the tube plate (19) at their exit-side end and open into an inflow chamber (21) at their entry-side end,
a head piece (22) which adjoins the tube plate (19) at the exit-side end and is subdivided into sections,
wherein the long tube bundle (18) is flowed through by a hot process gas which exits from a combustion chamber (2), wherein the inflow chamber (21) is arranged within the steam generator chamber and is acted upon by a cooler process gas (10) from a catalyst stage (4) of the Claus plant, wherein a respective tube bundle (18, 20) is assigned to each section of the head piece (22), and wherein devices for diverting condensed sulphur away are connected to the sections.

2. Waste heat boiler according to claim 1, **characterised in that** a head piece with a connection flange for direct attachment to the combustion chamber or to a splitting reactor containing the combustion chamber is connected to the entry-side tube plate.

3. Waste heat boiler according to claim 1 or 2, **characterised in that** the inflow chamber (21) has a mantle-side gas inlet for the process gas.

4. Waste heat boiler according to claim 1 or 2, **characterised in that** the inflow chamber (21) is subdivided into inflow chamber sections (21 a, 21 b), wherein each of the inflow chamber sections (21a, 21b) has a mantle-side gas inlet for the process gas from a catalyst stage of the Claus plant.

5. Waste heat boiler according to one of claims 1 to 4, **characterised in that** the position of the inflow chamber (21) is adapted to the temperature profile that occurs within the heat exchanger tubes of the long tube bundle (18) in such a way that the temperature differences between the inflow chamber (21) and the local temperature of the process gas guided through the long tube bundle (18) are less than 150°C.

6. Waste heat boiler according to one of claims 1 to 5, **characterised by** an additional tube (24) for hot process gas which is guided through the steam generator chamber, and a device (25) provided on the outflow side for controlling the volume flow of process gas through the additional tube (24), wherein the process gas exits from the additional tube (24) at a high temperature and can be used for heating the process gas stream which has been cooled to a temperature below the condensation temperature of sulphur.

## Revendications

1. Chaudière de récupération pour une installation de type Claus comprenant
- un espace générateur de vapeur entouré par une enveloppe (14) résistante à la pression,
- un long faisceau tubulaire (18) de tubes d'échange thermique, qui s'étendent au travers de l'espace générateur de vapeur et sont logés aux deux extrémités dans des fonds de tubes (19), qui délimitent l'espace générateur de vapeur,
- au moins un autre faisceau tubulaire (20) de tubes d'échange thermique plus courts, qui sont également logés dans le fond de tubes (19) à leur extrémité du côté sortie et débouchent dans un compartiment d'afflux (21) à leur extrémité du côté admission,
- une pièce de tête (22), qui se raccorde au fond de tubes (19) à l'extrémité du côté sortie et est subdivisée en sections,
le long faisceau tubulaire (18) étant balayé par un gaz de fabrication chaud qui s'échappe d'une chambre de combustion (2), le compartiment d'afflux (21) étant disposé à l'intérieur de l'espace générateur de vapeur et étant alimenté par un gaz de fabrication (10) plus froid d'un étage catalytique (4) de l'installation de type Claus, un faisceau tubulaire (18, 20) étant respectivement associé à chaque section de la pièce de tête (22), et des dispositifs d'évacuation du soufre condensé étant raccordés aux sections.

2. Chaudière de récupération suivant la revendication 1, **caractérisée en ce qu'**une pièce de tête avec une bride de raccordement pour la fixation directe sur la chambre de combustion ou sur un réacteur de craquage contenant la chambre de combustion est raccordée au fond de tubes du côté admission.

3. Chaudière de récupération suivant l'une des revendications 1 et 2, **caractérisée en ce que** le compartiment d'afflux (21) comporte une admission de gaz du côté enveloppe pour le gaz de fabrication.

4. Chaudière de récupération suivant l'une des revendications 1 et 2, **caractérisée en ce que** le compartiment d'afflux (21) est subdivisé en sections (21a, 21b), les sections (21a, 21b) du compartiment d'afflux comportant chacune une admission de gaz du côté enveloppe pour le gaz de fabrication d'un étage catalytique de l'installation de type Claus.

5. Chaudière de récupération suivant l'une des revendications 1 à 4, **caractérisée en ce que** la position du compartiment d'afflux (21) est adaptée au profil de températures s'établissant à l'intérieur des tubes d'échange thermique du long faisceau tubulaire (18) de sorte que les différences de température entre le compartiment d'afflux (21) et la température locale du gaz de fabrication guidé au travers du long faisceau tubulaire (18), sont inférieures à 150°C.

6. Chaudière de récupération suivant l'une des revendications 1 à 5, **caractérisée par** un tube supplémentaire (24), guidé au travers de l'espace générateur de vapeur, pour le gaz de fabrication chaud et par un dispositif (25), prévu sur le côté échappement, pour régler le débit du gaz de fabrication au travers du tube supplémentaire (24), le gaz de fabrication s'échappant à une température élevée du tube supplémentaire (24) et étant utilisable pour le chauffage du flux de gaz de fabrication, refroidi à une température inférieure à la température de condensation du soufre.
